# EUROPEAN PATENT SPECIFICATION

(11) **EP 4 033 374 B1**
(45) Date of publication and mention of the grant of the patent: **14.10.2026**
(21) Application number: 20866653.7
(22) Date of filing: 13.03.2020
(51) Int. Cl.: H04L 9/00, H04L 9/32

(54) **METHOD AND DEVICE FOR SYNCHRONIZING NODE DATA**
VERFAHREN UND VORRICHTUNG ZUR SYNCHRONISIERUNG VON KNOTENDATEN
PROCÉDÉ ET DISPOSITIF DE SYNCHRONISATION DE DONNÉES DE NOEUD

(30) Priority: 20.09.2019 CN 201910894819
(43) Date of publication of application: 27.07.2022
(73) Proprietor: Jingdong Technology Information Technology Co., Ltd., Beijing 100176 (CN)
(72) Inventor: SHAO, Zhuguang, Beijing 100176 (CN); SUN, Haibo, Beijing 100176 (CN); HUANG, Haiquan, Beijing 100176 (CN); ZHAO, Guangwei, Beijing 100176 (CN)
(74) Representative: Bandpay & Greuter
(86) International application number: PCT/CN2020/079088
(87) International publication number: WO 2021/051761

(56) References cited:
- CN-A- 107 103 054
- CN-A- 107 332 876
- CN-A- 107 944 034
- CN-A- 108 600 353
- CN-A- 109 165 229
- CN-A- 109 446 273
- CN-A- 110 113 408
- CN-A- 110 609 872
- US-A1- 2017 344 435

## Description

### TECHNICAL FIELD

Embodiments of the present disclosure relate to the field of computer technology, and in particular to a method and apparatus for synchronizing node data.

### BACKGROUND

With the development of blockchain technology, blockchains begin to be used for storage and interaction of more and more data. Blockchain is a new application mode of computer technology such as distributed data storage, point-to-point transmission, consensus mechanism, and encryption algorithm. In a blockchain system, a distributed ledger is jointly implemented by a plurality of nodes distributed in different places. Generally, each node records a complete account, and the consistency of storage is ensured through a consensus mechanism.

When a node in the blockchain system exits abnormally or other synchronization abnormalities occur, there are usually two related approaches: one is to copy a missing log of this node from another node and then reload the entire complete log (or execute all transactions); and the second is to copy complete data from another node to the local.
CN 107332876A describes a method of synchronizing block states in a blockchain, in which a data synchronization request is sent from a second node to a first node. CN 110113408A describes a method of block synchronization, in which a current node requests downloads of blocks of different heights from multiple nodes. CN 108600353A describes a method of block synchronization, in which a block synchronization request is sent from a node to another node.

### SUMMARY

Embodiments of the present disclosure propose a method and apparatus for synchronizing node data.

In a first aspect, a method for synchronizing node data is provided according to an embodiment of the disclosure. The node includes a backward node in a blockchain system, and the method includes: determining a target block height according to a local log file for synchronizing blockchain data of the blockchain system, where the target block height is used to indicate a processing progress of the blockchain data, and the blockchain data includes data and a block height corresponding to the data; sending a data synchronization request to a target node based on the target block height, where the data synchronization request includes the target block height; and writing, in response to receiving update data sent by the target node, the update data into a local storage area, where a block height corresponding to the update data is greater than the target block height.

In some embodiments, the sending a data synchronization request to a target node based on the target block height, includes: executing the local log file to generate the blockchain data corresponding to the local log file, where a block height corresponding to the data in the blockchain data corresponding to the local log file is smaller than or equal to the target block height; and sending, in response to determining that the execution of the local log file is completed, the data synchronization request to the target node.

In some embodiments, the data synchronization request includes a log file synchronization request; and the writing, in response to receiving update data sent by the target node, the update data into a local storage area, includes: writing, in response to receiving a log update file sent by the target node, the log update file into the local log file, where a block height corresponding to the log update file is greater than the target block height.

In some embodiments, the data synchronization request includes a blockchain data synchronization request; and the writing, in response to receiving update data sent by the target node, the update data into a local storage area, includes: writing, in response to receiving blockchain update data sent by the target node, the blockchain update data into a local data storage area, where a block height corresponding to the blockchain update data is greater than the target block height.

In some embodiments, the method further includes determining whether the writing of the update data is completed; and participating, in response to determining that the writing of the update data is completed, in a consensus process.

In a second aspect, an apparatus for synchronizing node data is provided according to an embodiment of the disclosure. The node includes a backward node in a blockchain system, and the apparatus includes: a determination unit, configured to determine a target block height according to a local log file for synchronizing blockchain data of the blockchain system, where the target block height is used to indicate a processing progress of the blockchain data, and the blockchain data includes data and a block height corresponding to the data; a sending unit, configured to send a data synchronization request to a target node based on the target block height, where the data synchronization request includes the target block height; and an update unit, configured to write, in response to receiving update data sent by the target node, the update data into a local storage area, where a block height corresponding to the update data is greater than the target block height.

In some embodiments, the sending unit includes: an executing module, configured to execute the local log file to generate the blockchain data corresponding to the local log file, where a block height corresponding to the data in the blockchain data corresponding to the local log file is smaller than or equal to the target block height; and a sending module, configured to send, in response to determining that the execution of the local log file is completed, the data synchronization request to the target node.

In some embodiments, the data synchronization request includes a log file synchronization request; and the update unit is further configured to: write, in response to receiving a log update file sent by the target node, the log update file into the local log file, where a block height corresponding to the log update file is greater than the target block height.

In some embodiments, the data synchronization request includes a blockchain data synchronization request; and the update unit is further configured to: write, in response to receiving blockchain update data sent by the target node, the blockchain update data into a local data storage area, where a block height corresponding to the blockchain update data is greater than the target block height.

In some embodiments, the apparatus is further configured to determine whether the writing of the update data is completed; and participate, in response to determining that the writing of the update data is completed, in a consensus process.

In a third aspect, a system for synchronizing node data is provide according to the embodiments of the disclosure. The system includes a backward node and a target node in a blockchain system. The backward node is configured to implement the method according to any embodiment of the first aspect; and the target node is configured to send, in response to receiving the data synchronization request sent by the backward node, the update data to the backward node, where the data synchronization request includes the target block height.

In some embodiments, the data synchronization request comprises the log file synchronization request; and the target node is further configured to: determine, in response to receiving the log file synchronization request sent by the backward node, an initial sending position of a local log file of the target node based on the target block height, wherein the initial sending position is used to indicate a dividing point of log data corresponding to a block having a block height greater than the target block height; and send, based on the initial sending position, the log data corresponding to the block having the block height greater than the target block height to the backward node.

In some embodiments, the data synchronization request comprises the blockchain data synchronization request; and the target node is further configured to: determine, in response to receiving the blockchain data synchronization request sent by the backward node, blockchain data having a block height greater than the target block height as blockchain update data; and send the blockchain update data to the backward node.

In some embodiments, the target node is further configured to: store, in response to receiving the blockchain data synchronization request sent by the backward node, the blockchain data having the block height greater than the target block height as the blockchain update data in a buffer array; sort the blockchain update data in the buffer array in an order of the block heights to generate a blockchain update data list; and send the blockchain update data to the backward node according to the order of the blockchain update data list.

In a fourth aspect, an embodiment of the present disclosure provides a computer readable medium storing a computer program thereon, where the program, when executed by a processor, implements the method according to any one embodiment in the first aspect.

In the method and apparatus for synchronizing node data provided by the embodiments of the present disclosure, through a backward node in a blockchain system, a target block height is determined according to a local log file for synchronizing blockchain data of the blockchain system, where the target block height is used to indicate a processing progress of the blockchain data, and the blockchain data includes data and a block height corresponding to the data. Then, the backward node sends a data synchronization request to a target node based on the target block height, where the data synchronization request includes the target block height. In response to receiving update data sent by the target node, the backward node writes the update data into a local storage area, where a block height corresponding to the update data is greater than the target block height. Thus, the synchronization efficiency of backward nodes in a blockchain system is improved, and network resources are saved.

### BRIEF DESCRIPTION OF THE DRAWINGS

By reading the detailed description of non-limiting embodiments with reference to the following accompanying drawings, other features, objects and advantages of the present disclosure will become more apparent:
Fig. 1 is an example system architecture diagram to which an embodiment of the present disclosure may be applied;
Fig. 2 is a flowchart of an embodiment of a method for synchronizing node data according to the present disclosure;
Fig. 3 is a schematic diagram of an application scenario of the method for synchronizing node data according to an embodiment of the present disclosure;
Fig. 4 is a flowchart of another embodiment of the method for synchronizing node data according to the present disclosure;
Fig. 5 is a schematic structural diagram of an embodiment of an apparatus for synchronizing node data according to the present disclosure;
Fig. 6 is a sequence diagram of interaction between devices in an embodiment of a system for synchronizing node data according to the present disclosure; and
Fig. 7 is a schematic structural diagram of an electronic device adapted to implement embodiments of the present disclosure.

### DETAILED DESCRIPTION OF EMBODIMENTS

Embodiments of the present disclosure will be further described below in detail in combination with the accompanying drawings. It should be appreciated that detailed embodiments described herein are merely used for explaining the relevant disclosure, rather than limiting the disclosure. In addition, it should be noted that, for the ease of description, only the parts related to the relevant disclosure are shown in the accompanying drawings.

It should be noted that embodiments in the present disclosure and the features in embodiments may be combined with each other on a non-conflict basis.

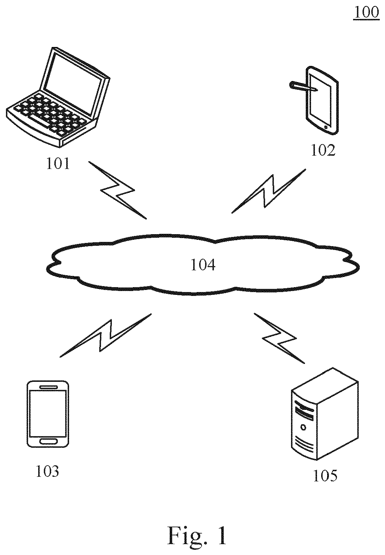

Fig. 1 shows an example architecture 100 to which a method for synchronizing node data or an apparatus for synchronizing node data of the present disclosure may be applied.

As shown in Fig. 1, the system architecture 100 may include terminal devices 101, 102, 103, a network 104 and a server 105. The network 104 serves as a medium for providing a communication link between the terminal devices 101, 102, 103 and the server 105. The network 104 may include various types of connections, such as wired or wireless communication links, or optical fiber cables.

The terminal devices 101, 102, 103 interact with the server 105 through the network 104 to receive or send messages and so on. Various communication client applications, such as web browser applications, shopping applications, search applications, instant messaging tools, email clients, social platform software, and text editing applications, may be installed on the terminal devices 101, 102, and 103.

The terminal devices 101, 102, and 103 may be hardware or software. When the terminal devices 101, 102, 103 are hardware, they may be various electronic devices having display screens and supporting network data transmission, including but not limited to smart phones, tablet computers, E-book readers, laptop computers, desktop computers, and so on. When the terminal devices 101, 102, 103 are software, they may be installed in the electronic devices listed above. They may be implemented as a plurality of software pieces or software modules (for example, software pieces or software modules used to provide distributed services), or as a single software piece or software module, which is not limited herein.

The server 105 may be a server that provides various services. The server 105 may be in the same blockchain system as the terminal devices 101, 102, and 103, and each of the server and the terminal devices serves as a node in the blockchain system. When a node in the blockchain is abnormal, local data of the node is missing compared with a main chain. The above abnormal node may be regarded as a backward node, and other nodes may be regarded as normal nodes.

It should be noted that the server may be hardware or software. When the server is hardware, it may be implemented as a distributed server cluster composed of a plurality of servers, or as a single server. When the server is software, it may be implemented as a plurality of software pieces or software modules (for example, software pieces or software modules used to provide distributed services), or as a single software piece or software module, which is not limited herein.

It should be noted that the method for synchronizing node data provided by the embodiments of the present disclosure is generally executed by a backward node in a blockchain system. Correspondingly, the apparatus for synchronizing node data may be arranged in the backward node. The backward node may be either the server 105 or the terminal device 101, 102, 103.

It should be appreciated that the number of the terminal devices, the network and the server in Fig. 1 is merely illustrative. Any number of terminal devices, networks and servers may be provided according to implementation needs.

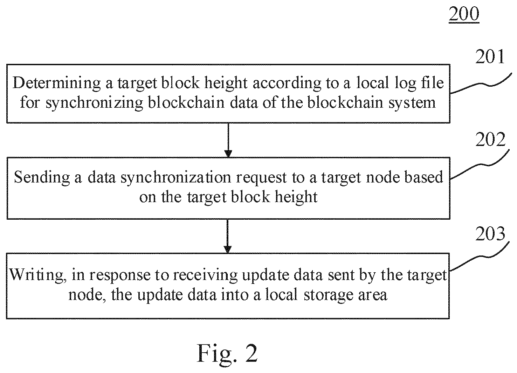

With further reference to Fig. 2, illustrating a flow 200 of an embodiment of a method for synchronizing node data according to the present disclosure. The method for synchronizing node data includes the following steps:

Step 201: determining a target block height according to a local log file for synchronizing blockchain data of the blockchain system.

In the present embodiment, an executing body of the method for synchronizing node data (as shown in Fig. 1, the terminal device 101, 102, 103 or the server 105 as a backward node) may determine the target block height in various methods according to the local log file. The local log file may be a local log file for synchronizing the blockchain data of the blockchain system. The target block height may be used to indicate a processing progress of the blockchain data. The blockchain data may include data and a block height corresponding to the data. As an example, the executing body may traverse the local log file in reverse order, and determine a maximum block height corresponding to the written local log file as the target block height. Alternatively, the executing body may only determine a maximum value of block heights corresponding to the local log files that are completely and successfully written as the maximum block height, that is, a block that is partially process is abandoned.

It should be noted that the data in the blockchain data may be stored in a form of key-value pair. In the present embodiment, the blockchain data may also include a block height corresponding to the stored key-value pair. The block height may take various forms, which are not limited herein.

It should also be noted that when the nodes in the blockchain system perform data synchronization, the corresponding blockchain data may usually be generated by executing the local log file. The method for generating the corresponding data by executing the local log file is a well-known technology widely studied and applied at present, and detailed description thereof will be omitted.

Step 202: sending a data synchronization request to a target node based on the target block height.

In the present embodiment, the executing body may send the data synchronization request to the target node based on the target block height acquired in step 201. The target node may be any node pre-designated according to actual application requirements. The target node may alternatively be a node determined according to rules, for example, a non-backward node that is in the same blockchain system as the backward node.

In the present embodiment, the executing body may send to the target node the data synchronization request that represents a request to acquire blockchain data having a block height greater than the target block height. The data synchronization request may include the target block height. Alternatively, the data synchronization request may include a log file synchronization request. Alternatively, the data synchronization request may include a blockchain data synchronization request.

In some alternative implementations of the present embodiment, the executing body may send the data synchronization request to the target node according to the following steps.

First step includes executing the local log file to generate blockchain data corresponding to the local log file.

In these implementations, the executing body may generally execute the local log file according to its order to generate the blockchain data corresponding to the executed local log file. A block height corresponding to data in the blockchain data corresponding to the local log file is less than or equal to the target block height.

Second step includes sending, in response to determining that the execution of the local log file is completed, the data synchronization request to the target node.

In these implementations, the executing body may send, in response to determining that the execution of the local log file is completed, the data synchronization request to the target node.

It should be noted that the executing body may use a record of the local log file indicated by the target block height as an end of the execution, that is, a newly synchronized log file is no longer executed.

Step 203: writing, in response to receiving update data sent by the target node, the update data into a local storage area.

In the present embodiment, the data synchronization request may include a log file synchronization request, and in response to receiving a log update file sent by the target node, the executing body may write the log update file into the local log file. A block height corresponding to the log update file is generally greater than the target block height.

In some alternative implementations of the present embodiment, the data synchronization request may include a blockchain data synchronization request, and in response to receiving blockchain update data sent by the target node, the executing body may write the blockchain update data into a local data storage area. A block height corresponding to the blockchain update data is generally greater than the target block height.

It should be noted that, based on the above alternative implementations, executing the local log file, writing the log update file into the local log file, and writing the blockchain update data into the local data storage area may alternatively be executed basically in parallel by starting three threads. Thereby, the time for node synchronization may be reduced, and the speed of node synchronization may be improved, which in turn may help maintaining the stability of the blockchain system.

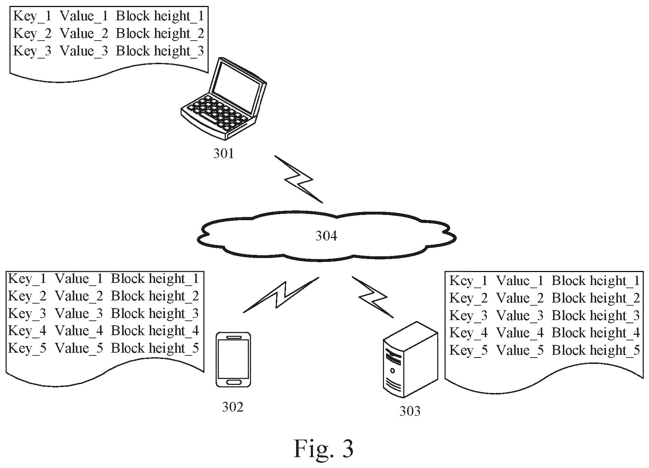

With further reference to Fig. 3, Fig. 3 is a schematic diagram of an application scenario of the method for synchronizing node data according to an embodiment of the present disclosure. In the application scenario of Fig. 3, a blockchain system includes nodes 301, 302, and 303. The nodes 301, 302, and 303 are connected through a network 304. The node 301 traverses a local log file in reverse order to acquire a local current maximum block height of 3. The node 301 regularly acquires the maximum block heights of the node 302 and the node 303, for example, both are 5. In response to determining that the acquired maximum block height of the node 302 or the node 303 is greater than the local current maximum block height, the node 301 may be determined as a backward node. The node 301 may send a data synchronization request containing a local maximum block height of 5 to the node 302. The node 302 may send data corresponding to the block heights of 4 and 5 as update data to the node 301. The node 301 may write the update data into a local storage area.

At present, in an existing approach, a missing log is generally copied and reloaded in the node. Because the cost of log copying is high and log loading needs to be executed locally, the performance is low, which often severely hampers subsequent participation of the node in a consensus process. In the method provided by the above embodiments of the present disclosure, the target block height is determined through the local log file, and the log is not reloaded, thereby saving local computing resources. In addition, in the existing technology, the complete data of other nodes are copied to the local for synchronization, which makes it difficult to de-duplicate local data and consumes network transmission resources. The method provided by the above embodiments of the present disclosure also performs incremental synchronization by writing the received update data into the local storage area, which saves network resources and improves the synchronization efficiency.

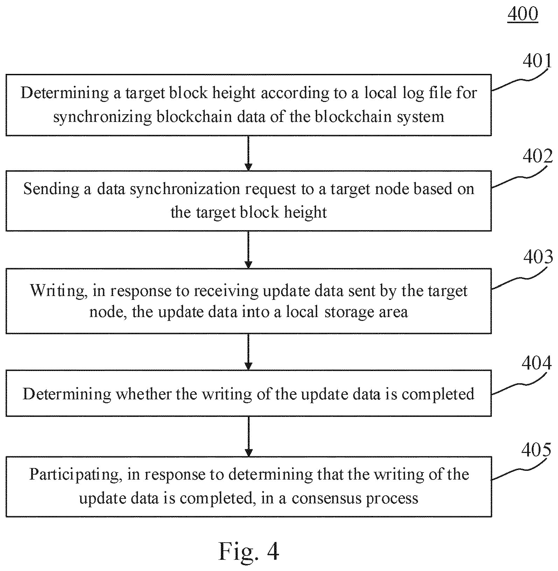

With further reference to Fig. 4, illustrating a flow 400 of another embodiment of the method for synchronizing node data. The flow 400 of the method for synchronizing node data includes the following steps.

Step 401: determining a target block height according to a local log file for synchronizing blockchain data of the blockchain system.

Step 402: sending a data synchronization request to a target node based on the target block height.

Step 403: writing, in response to receiving update data sent by the target node, the update data into a local storage area.

The above step 401, step 402, and step 403 are respectively consistent with step 201, step 202, and step 203 in the foregoing embodiment. The above description of step 201, step 202, and step 203 also applies to step 401, step 402, and step 403, and detailed description thereof will be omitted.

Step 404: determining whether the writing of the update data is completed.

In the present embodiment, the executing body of the method for synchronizing node data (for example, the terminal device 101, terminal device 102, terminal device 103 or the server 105, which is a backward node, shown in Fig. 1) may determine whether the writing of the update data is completed in various methods. As an example, when the update data is the log update file, in response to determining that the writing of all logs that are included in the target node and are not included in the backward node are fully completed, the executing body may determine that the writing of the update data is completed. As another example, when the update data is the blockchain update data, in response to determining that the writing of all the blockchain update data is completed, the executing body may determine that the writing of the update data is completed. The blockchain update data may usually be generated by the target node according to a local log file of the target node.

Step 405: participating, in response to determining that the writing of the update data is completed, in a consensus process.

In the present embodiment, in response to determining that the writing of the update data is completed, the executing body may determine that the synchronization is completed. Therefore, the executing body no longer belongs to a backward node, and may participate in the subsequent consensus process. The consensus process may include decision-making processes of various consensus algorithms that may be used in the blockchain.

It can be seen from Fig. 4 that the flow 400 of the method for synchronizing node data in the present embodiment reflects the step of determining whether the writing of the update data is completed, and the step of participating in the consensus process in response to determining that the writing of the update data is completed. Therefore, the solution described in the present embodiment may allow nodes where the writing of the update data is completed to participate in the consensus process, thereby realizing node synchronization in the blockchain system and ensuring the smooth progress of the consensus process.

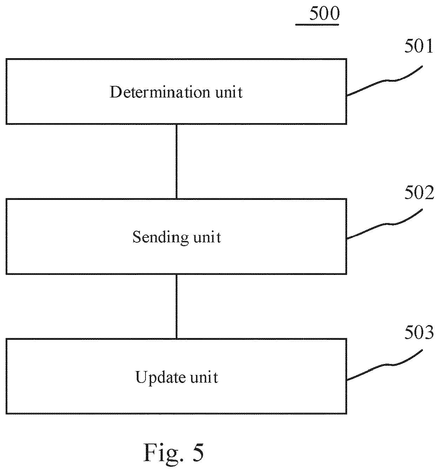

With further reference to Fig. 5, as an implementation of the method shown in the above figures, the present disclosure provides an embodiment of an apparatus for synchronizing node data. The apparatus embodiment corresponds to the method embodiment as shown in Fig. 2. The apparatus may be applied to various electronic devices.

As shown in Fig. 5, an apparatus 500 for synchronizing node data provided by the present embodiment includes: a determination unit 501, a sending unit 502 and an update unit 503. The determination unit 501 is configured to determine a target block height according to a local log file for synchronizing blockchain data of the blockchain system. The target block height is used to indicate a processing progress of the blockchain data, and the blockchain data includes data and a block height corresponding to the data. The sending unit 502 is configured to send a data synchronization request to a target node based on the target block height. The data synchronization request includes the target block height. The update unit 503 is configured to write, in response to receiving update data sent by the target node, the update data into a local storage area. A block height corresponding to the update data is greater than the target block height.

In the present embodiment, in the apparatus 500 for synchronizing node data: for the specific processing and the technical effects of the determination unit 501, the sending unit 502 and the update unit 503, reference may be made to the relevant descriptions of step 201, step 202 and step 203 in the embodiment corresponding to Fig. 2 respectively, and detailed description thereof will be omitted.

In some alternative implementations of the present embodiment, the sending unit 502 may include: an executing module (not shown in the figure), and a sending module (not shown in the figure). The executing module may be configured to execute the local log file to generate blockchain data corresponding to the local log file. A block height corresponding to data in the blockchain data corresponding to the local log file is generally smaller than or equal to the target block height. The sending module may be configured to send, in response to determining that the execution of the local log file is completed, the data synchronization request to the target node.

In some alternative implementations of the present embodiment, the data synchronization request may include a log file synchronization request. The update unit 503 may be further configured to: write, in response to receiving a log update file sent by the target node, the log update file into the local log file. A block height corresponding to the log update file may be greater than the target block height.

In some alternative implementations of the present embodiment, the data synchronization request may include a blockchain data synchronization request. The update unit 503 may be further configured to: write, in response to receiving blockchain update data sent by the target node, the blockchain update data into a local data storage area. A block height corresponding to the blockchain update data may be greater than the target block height.

In some alternative implementations of the present embodiment, the apparatus 500 for synchronizing node data may be further configured to: determine whether the writing of the update data is completed; and participate, in response to determining that the writing of the update data is completed, in a consensus process.

In the apparatus provided by the above embodiment of the present disclosure, through a backward node in a blockchain system, the determination unit 501 determines a target block height according to a local log file for synchronizing blockchain data of the blockchain system, where the target block height is used to indicate a processing progress of the blockchain data, and the blockchain data includes data and a block height corresponding to the data. Then, the sending unit 502 sends a data synchronization request to a target node based on the target block height, where the data synchronization request includes the target block height. In response to receiving update data sent by the target node, the update unit 503 writes the update data into a local storage area, where a block height corresponding to the update data is greater than the target block height. Thus, the synchronization efficiency of backward nodes in a blockchain system is improved, and network resources are saved.

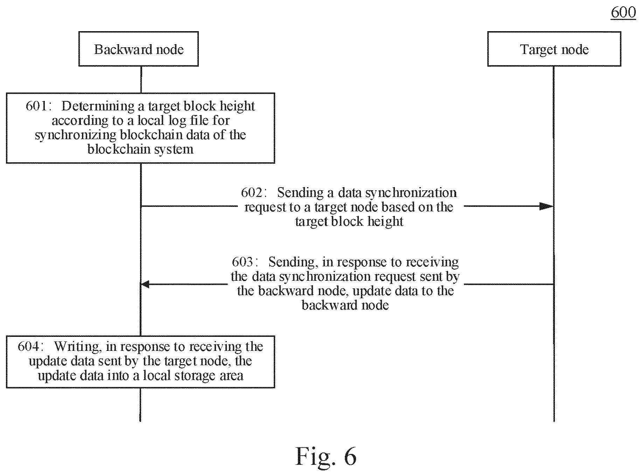

With further reference to Fig. 6, illustrating a sequence 600 of interaction between various devices in an embodiment for synchronizing node data. The system for synchronizing node data may include: a backward node (for example, the terminal device 101 shown in Fig. 1), and a target node (for example, the server 105 shown in Fig. 1). The backward node may be configured to implement the method for synchronizing node data as described in the foregoing embodiments. The target node may be configured to send the update data to the backward node in response to receiving the data synchronization request sent by the backward node. The data synchronization request may include the target block height.

In some alternative implementations of the present embodiment, the data synchronization request may include the log file synchronization request. The target node may be further configured to: determining, in response to receiving the log file synchronization request sent by the backward node, an initial sending position of a local log file of the target node based on the target block height; and sending, based on the initial sending position, the log data corresponding to the block having a block height greater than the target block height to the backward node. The initial sending position may be used to indicate a dividing point of log data corresponding to a block having a block height greater than the target block height.

In some alternative implementations of the present embodiment, the data synchronization request may include the blockchain data synchronization request. The target node may be further configured to: determine, in response to receiving the blockchain data synchronization request sent by the backward node, blockchain data having a block height greater than the target block height as blockchain update data; and send the blockchain update data to the backward node.

Based on the above alternative implementations, the target node may be further configured to: store, in response to receiving the blockchain data synchronization request sent by the backward node, the blockchain data having the block height greater than the target block height as the blockchain update data in a buffer array; sort the blockchain update data in the buffer array based on the block heights to generate a blockchain update data list; and send the blockchain update data to the backward node according to an order of the blockchain update data list.

As shown in Fig. 6, in step 601, the backward node determines a target block height according to a local log file for synchronizing blockchain data of the blockchain system.

In step 602, the backward node sends a data synchronization request to a target node based on the target block height.

In step 603, the target node sends, in response to receiving the data synchronization request sent by the backward node, the update data to the backward node.

In the present embodiment, in response to receiving the data synchronization request sent by the backward node, the target node may send the update data to the backward node in various methods. The data synchronization request may include the target block height.

In some alternative implementations of the present embodiment, the data synchronization request may include the log file synchronization request. The target node may also send the update data to the backward node through the following steps.

First, determining, in response to receiving the log file synchronization request sent by the backward node, an initial sending position of a local log file of the target node based on the target block height.

In these implementations, the target node may locate a record in the local log file based on the target block height to determine the initial sending position. The initial sending position may be used to indicate a dividing point of log data corresponding to a block having a block height greater than the target block height. For example, if the target block height is 3, the initial sending position may be used to indicate a record corresponding to a block having a block height of 4.

Secondly, sending, based on the initial sending position, the log data corresponding to the block greater than the target block height to the backward node.

In these implementations, the target node may send the log data corresponding to the block having a block height greater than the target block height to the backward node piece by piece according to an order of logs. It may be understood that the target node may also package and send the log data, which is not limited herein.

In some alternative implementations of the present embodiment, the data synchronization request may include the blockchain data synchronization request. The target node may also send the update data to the backward node through the following steps.

First step includes determining, in response to receiving the blockchain data synchronization request sent by the backward node, blockchain data having a block height greater than the target block height as blockchain update data.

Second step includes: sending the blockchain update data to the backward node.

Alternatively, the target node may alternatively send the update data to the backward node through the following steps.

First step includes: storing, in response to receiving the blockchain data synchronization request sent by the backward node, the blockchain data having the block height greater than the target block height as the blockchain update data in a buffer array.

Based on the above alternative implementations, in response to receiving the blockchain data synchronization request sent by the backward node, the target node may traverse the locally stored pieces of blockchain data one by one. Based on the block height corresponding to the blockchain data, the target node may determine whether the block height corresponding to the blockchain data is greater than the target block height. Then, the target node may store the blockchain data having the block height greater than the target block height as the blockchain update data in the buffer array.

Second step includes: sorting the blockchain update data in the buffer array in an order of the block heights to generate a blockchain update data list. As an example, the blockchain update data list may be arranged in an ascending order of the block heights.

Third step includes sending the blockchain update data to the backward node according to an order of the blockchain update data list. Alternatively, in response to completion of sending the blockchain update data in the blockchain update data list, the target node may alternatively check whether there is newly generated data. If there is the newly generated data, the newly generated data continues to be sent to the backward node.

In step 604, the backward node writes, in response to receiving the update data sent by the target node, the update data into a local storage area.

The above step 601, step 602, and step 604 are respectively consistent with step 201, step 202, and step 203 in the foregoing embodiment. The above description of step 201, step 202, and step 203 also applies to step 601, step 602, and step 604, and detailed description thereof will be omitted.

The system for synchronizing node data provided by the above embodiment of the present disclosure, first the backward node determines the target block height according to the local log file for synchronizing blockchain data of the blockchain system. Then, the backward node sends the data synchronization request to the target node based on the target block height. Next, the target node sends, in response to receiving the data synchronization request sent by the backward node, the update data to the backward node. After that, the backward node writes, in response to receiving the update data sent by the target node, the update data into the local storage area. Thus, through the interaction between the backward node and the target node, data synchronization of the backward node is realized, the synchronization time is reduced, and the efficiency is improved. Furthermore, the synchronization and consistency of the node data in the blockchain system ensures the smooth progress of the consensus process.

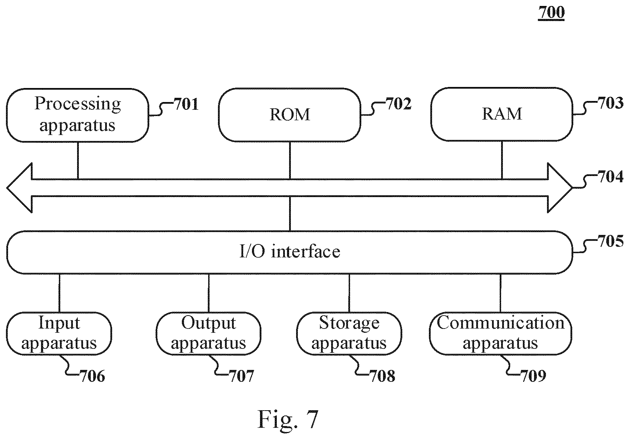

With further reference to Fig. 7, illustrating a schematic structural diagram of an electronic device (for example, the terminal device in Fig. 1) 700 suitable for implementing the embodiments of the present disclosure. The terminal devices in the embodiments of the present disclosure may include, but are not limited to, mobile terminals such as mobile phones, notebook computers, digital broadcast receivers, PDAs (personal digital assistants), PADs (tablets), PMPs (portable multimedia players), vehicle-mounted terminals (for example, vehicle-mounted navigation terminals) and fixed terminals such as desktop computers. The terminal device shown in Fig. 7 is only an example, and should not bring any limitation to the functions and scope of use of the embodiments of the present disclosure.

As shown in Fig. 7, the electronic device 700 may include a processing apparatus 701 (e.g., a central processing unit or a graphics processing unit), which may execute various appropriate actions and processes in accordance with a program stored in a read-only memory (ROM) 702 or a program loaded into a random access memory (RAM) 703 from a storage apparatus 708. The RAM 703 further stores various programs and data required by operations of the electronic device 700. The processing apparatus 701, the ROM 702, and the RAM 703 are connected to each other through a bus 704. An input/output (I/O) interface 705 is also connected to the bus 704.

In general, the following apparatuses may be connected to the I/O interface 705: an input apparatus 707 including a touch screen, a touch pad, a keyboard, a mouse, a camera, a microphone, an accelerometer, a gyroscope, or the like; an output apparatus 707 including a liquid crystal display device (LCD), a speaker, a vibrator, or the like; a storage apparatus 708 including a magnetic tape, a hard disk, or the like; and a communication apparatus 709. The communication apparatus 709 may allow the electronic device 700 to exchange data with other devices through wireless or wired communication. While Fig. 7 shows the electronic device 700 having various apparatuses, it should be understood that it is not necessary to implement or provide all of the apparatuses shown in the figure. More or fewer apparatuses may be alternatively implemented or provided. Each block shown in Fig. 7 may represent an apparatus, or represent a plurality of apparatuses as required.

In particular, according to the embodiments of the present disclosure, the process described above with reference to the flow chart may be implemented as a computer software program. For example, the embodiments of the present disclosure include a computer program product, which includes a computer program that is tangibly embedded in a computer readable medium. The computer program includes a program code for executing the method as shown in the flow chart. In such an embodiment, the computer program may be downloaded and installed from a network via the communication apparatus 709, or may be installed from the storage apparatus 708, or may be installed from the ROM 702. The computer program, when executed by the processing apparatus 701, implements the above functions as defined by the method of the embodiments of the present disclosure.

It should be noted that the computer readable medium of the embodiments of the present disclosure may be a computer readable signal medium or a computer readable storage medium, or any combination of the above two. An example of the computer readable storage medium may include, but is not limited to: electric, magnetic, optical, electromagnetic, infrared, or semiconductor systems, apparatuses, elements, or a combination of any of the above. A more specific example of the computer readable storage medium may include, but is not limited to: an electrical connection with one or more pieces of wire, a portable computer disk, a hard disk, a random access memory (RAM), a read only memory (ROM), an erasable programmable read only memory (EPROM or flash memory), an optical fiber, a portable compact disk read only memory (CD-ROM), an optical memory, a magnetic memory, or any suitable combination of the above. In the embodiments of the present disclosure, the computer readable storage medium may be any tangible medium containing or storing programs which may be used by, or used in combination with, a command execution system, apparatus or element. In the embodiments of the present disclosure, the computer readable signal medium may include a data signal in the base band or propagating as a part of a carrier wave, in which a computer readable program code is carried. The propagating data signal may take various forms, including but not limited to an electromagnetic signal, an optical signal, or any suitable combination of the above. The computer readable signal medium may also be any computer readable medium except for the computer readable storage medium. The computer readable signal medium is capable of transmitting, propagating or transferring programs for use by, or use in combination with, a command execution system, apparatus or element. The program code contained on the computer readable medium may be transmitted with any suitable medium, including but not limited to: wire, an optical cable, a RF (radio frequency) medium etc., or any suitable combination of the above.

The computer readable medium may be included in the electronic device; or may alternatively be present alone and not assembled into the electronic device. The computer readable medium carries one or more programs that, when executed by the electronic device, cause the electronic device to: determine a target block height according to a local log file for synchronizing blockchain data of the blockchain system, where the target block height is used to indicate a processing progress of the blockchain data, and the blockchain data includes data and a block height corresponding to the data; send a data synchronization request to a target node based on the target block height, where the data synchronization request includes the target block height; and write, in response to receiving update data sent by the target node, the update data into a local storage area, where a block height corresponding to the update data is greater than the target block height.

A computer program code for executing operations in the embodiments of the present disclosure may be compiled using one or more programming languages or combinations thereof. The programming languages include object-oriented programming languages, such as Java, Smalltalk or C++, and also include conventional procedural programming languages, such as "C" language or similar programming languages. The program code may be completely executed on a user's computer, partially executed on a user's computer, executed as a separate software package, partially executed on a user's computer and partially executed on a remote computer, or completely executed on a remote computer or server. In the case where a remote computer is involved, the remote computer may be connected to a user computer through any kind of networks, including a local area network (LAN) or a wide area network (WAN), or may be connected to an external computer (for example, connected through the Internet using an Internet service provider).

The flow charts and block diagrams in the accompanying drawings illustrate architectures, functions and operations that may be implemented according to the systems, methods and computer program products of the various embodiments of the present disclosure. In this regard, each of the blocks in the flow charts or block diagrams may represent a module, a program segment, or a code portion, said module, program segment, or code portion including one or more executable instructions for implementing specified logic functions. It should also be noted that, in some alternative implementations, the functions denoted by the blocks may occur in a sequence different from the sequences shown in the figures. For example, any two blocks presented in succession may be executed substantially in parallel, or sometimes be executed in a reverse sequence, depending on the functions involved. It should also be noted that each block in the block diagrams and/or flow charts as well as a combination of blocks in the block diagrams and/or flow charts may be implemented using a dedicated hardware-based system executing specified functions or operations, or by a combination of dedicated hardware and computer instructions.

The units involved in the embodiments of the present disclosure may be implemented by means of software or hardware. The described units may also be provided in a processor, for example, may be described as: a processor, including a determination unit, a sending unit and an update unit, where the names of these units do not constitute a limitation to such units themselves in some cases. For example, the determination unit may alternatively be described as "a unit of determining a target block height according to a local log file for synchronizing blockchain data of the blockchain system".

The above description only provides explanation of the preferred embodiments and the employed technical principles of the present disclosure. It should be appreciated by those skilled in the art that the inventive scope of the present disclosure is not limited to the technical solutions formed by particular combinations of the above-described technical features, and should also cover other technical solutions formed by any combinations of the above-described technical features or equivalent features thereof without departing from the above inventive concepts, for example, technical solutions formed by interchanging the above-described features with, but not limited to, technical features with similar functions disclosed in the present disclosure.

## Claims

1. A method for synchronizing node data, the node comprising a backward node in a blockchain system, and the method comprising:
determining (201) a target block height according to a local log file for synchronizing blockchain data of the blockchain system, wherein the target block height is used to indicate a processing progress of the blockchain data, and the blockchain data comprises data and a block height corresponding to the data;
sending (202) a data synchronization request to a target node based on the target block height, wherein the data synchronization request comprises the target block height; and
writing (203), in response to receiving update data sent by the target node, the update data into a local storage area, wherein a block height corresponding to the update data is greater than the target block height,
wherein the sending a data synchronization request to a target node based on the target block height, comprises:
executing the local log file to generate the blockchain data corresponding to the local log file, wherein a block height corresponding to the data in the blockchain data corresponding to the local log file is smaller than or equal to the target block height; and
sending, in response to determining that the execution of the local log file is completed, the data synchronization request to the target node.

2. The method according to claim 1, wherein the data synchronization request comprises a log file synchronization request; and
the writing, in response to receiving update data sent by the target node, the update data into a local storage area, comprises:
writing, in response to receiving a log update file sent by the target node, the log update file into the local log file, wherein a block height corresponding to the log update file is greater than the target block height.

3. The method according to claim 1, wherein the data synchronization request comprises a blockchain data synchronization request; and
the writing, in response to receiving update data sent by the target node, the update data into a local storage area, comprises:
writing, in response to receiving blockchain update data sent by the target node, the blockchain update data into a local data storage area, wherein a block height corresponding to the blockchain update data is greater than the target block height.

4. The method according to any one of claims 1-3, wherein the method further comprises:
determining (404) whether the writing of the update data is completed; and
participating (405), in response to determining that the writing of the update data is completed, in a consensus process.

5. An apparatus for synchronizing node data, the node comprising a backward node in a blockchain system, and the apparatus comprising:
a determination unit (501), configured to determine a target block height according to a local log file for synchronizing blockchain data of the blockchain system, wherein the target block height is used to indicate a processing progress of the blockchain data, and the blockchain data comprises data and a block height corresponding to the data;
a sending unit (502), configured to send a data synchronization request to a target node based on the target block height, wherein the data synchronization request comprises the target block height; and
an update unit (503), configured to write, in response to receiving update data sent by the target node, the update data into a local storage area, wherein a block height corresponding to the update data is greater than the target block height,
wherein the sending unit comprises:
an executing module, configured to execute the local log file to generate the blockchain data corresponding to the local log file, wherein a block height corresponding to the data in the blockchain data corresponding to the local log file is smaller than or equal to the target block height; and
a sending module, configured to send, in response to determining that the execution of the local log file is completed, the data synchronization request to the target node.

6. The apparatus according to claim 5, wherein the data synchronization request comprises a log file synchronization request; and the update unit is further configured to:
write, in response to receiving a log update file sent by the target node, the log update file into the local log file, wherein a block height corresponding to the log update file is greater than the target block height.

7. The apparatus according to claim 5, wherein the data synchronization request comprises a blockchain data synchronization request; and the update unit is further configured to:
write, in response to receiving blockchain update data sent by the target node, the blockchain update data into a local data storage area, wherein a block height corresponding to the blockchain update data is greater than the target block height.

8. The apparatus according to any one of claims 5-7, wherein the apparatus is further configured to:
determine whether the writing of the update data is completed; and
participate, in response to determining that the writing of the update data is completed, in a consensus process.

9. A system for synchronizing node data, comprising a backward node and a target node in a blockchain system;
the backward node being configured to implement the method according to any one of claims 1-4; and
the target node being configured to send, in response to receiving the data synchronization request sent by the backward node, the update data to the backward node, wherein the data synchronization request comprises the target block height.

10. The system according to claim 9, wherein the data synchronization request comprises the log file synchronization request; and the target node is further configured to:
determine, in response to receiving the log file synchronization request sent by the backward node, an initial sending position of a local log file of the target node based on the target block height, wherein the initial sending position is used to indicate a dividing point of log data corresponding to a block having a block height greater than the target block height; and
send, based on the initial sending position, the log data corresponding to the block having the block height greater than the target block height to the backward node.

11. The system according to claim 9, wherein the data synchronization request comprises the blockchain data synchronization request; and the target node is further configured to:
determine, in response to receiving the blockchain data synchronization request sent by the backward node, blockchain data having a block height greater than the target block height as blockchain update data; and
send the blockchain update data to the backward node.

12. The system according to claim 11, wherein the target node is further configured to:
store, in response to receiving the blockchain data synchronization request sent by the backward node, the blockchain data having the block height greater than the target block height as the blockchain update data in a buffer array;
sort the blockchain update data in the buffer array in an order of the block heights to generate a blockchain update data list; and
send the blockchain update data to the backward node according to the order of the blockchain update data list.

13. A computer-readable medium, storing a computer program thereon, wherein the program, when executed by a processor, implements the method according to any one of claims 1 to 4.

## Patentansprüche

1. Verfahren zum Synchronisieren von Knotendaten, der Knoten umfassend einen Rückwärts-Knoten in einem Blockchain-System, und das Verfahren umfassend:
Bestimmen (201) einer Zielblockhöhe gemäß einer lokalen Protokolldatei zum Synchronisieren von Blockchain-Daten des Blockchain-Systems, wobei die Zielblockhöhe verwendet wird, um einen Verarbeitungsfortschritt der Blockchain-Daten anzugeben, und die Blockchain-Daten Daten und eine Blockhöhe, die den Daten entspricht, umfassen;
Senden (202) einer Datensynchronisierungsanforderung an einen Zielknoten basierend auf der Zielblockhöhe, wobei die Datensynchronisierungsanforderung die Zielblockhöhe umfasst; und
Schreiben (203), als Reaktion auf den Empfang von Aktualisierungsdaten, die von dem Zielknoten gesendet werden, der Aktualisierungsdaten in einen lokalen Speicherbereich, wobei eine Blockhöhe, die den Aktualisierungsdaten entspricht, größer ist als die Zielblockhöhe,
wobei das Senden einer Datensynchronisierungsanforderung an einen Zielknoten basierend auf der Zielblockhöhe Folgendes umfasst:
Ausführen der lokalen Protokolldatei, um die Blockchain-Daten zu generieren, die der lokalen Protokolldatei entsprechen, wobei eine Blockhöhe, die den Daten in den Blockchain-Daten entspricht, die der lokalen Protokolldatei entsprechen, kleiner als oder gleich wie die Zielblockhöhe ist; und
Senden, als Reaktion auf ein Bestimmen, dass die Ausführung der lokalen Protokolldatei abgeschlossen ist, der Datensynchronisierungsanforderung an den Zielknoten.

2. Verfahren nach Anspruch 1, wobei die Datensynchronisierungsanforderung eine Protokolldatei-Synchronisierungsanforderung umfasst; und
das Schreiben, als Reaktion auf ein Empfangen von Aktualisierungsdaten, die von dem Zielknoten gesendet werden, der Aktualisierungsdaten in einen lokalen Speicherbereich, Folgendes umfasst:
Schreiben, als Reaktion auf ein Empfangen einer von de Zielknoten gesendeten Protokollaktualisierungsdatei, der Protokollaktualisierungsdatei in die lokale Protokolldatei, wobei eine Blockhöhe, die der Protokollaktualisierungsdatei entspricht, größer ist als die Zielblockhöhe.

3. Verfahren nach Anspruch 1, wobei die Datensynchronisierungsanforderung eine Blockchain-Daten-Synchronisierungsanforderung umfasst; und
das Schreiben, als Reaktion auf ein Empfangen von Aktualisierungsdaten, die von dem Zielknoten gesendet werden, der Aktualisierungsdaten in einen lokalen Speicherbereich, Folgendes umfasst:
Schreiben, als Reaktion auf ein Empfangen von Blockchain-Aktualisierungsdaten, die von dem Zielknoten gesendet werden, der Blockchain-Aktualisierungsdaten in einen lokalen Datenspeicherbereich, wobei eine Blockhöhe, die den Blockchain-Aktualisierungsdaten entspricht, größer ist als die Zielblockhöhe.

4. Verfahren nach einem der Ansprüche 1 bis 3, wobei das Verfahren ferner Folgendes umfasst:
Bestimmen (404), ob das Schreiben der Aktualisierungsdaten abgeschlossen ist; und
Teilnehmen (405), als Reaktion auf ein Bestimmen, dass das Schreiben der Aktualisierungsdaten abgeschlossen ist, an einem Konsensprozess.

5. Vorrichtung zum Synchronisieren von Knotendaten, der Knoten umfassend einen Rückwärts-Knoten in einem Blockchain-System, und die Vorrichtung umfassend:
eine Bestimmungseinheit (501), die konfiguriert ist, um eine Zielblockhöhe gemäß einer lokalen Protokolldatei zum Synchronisieren von Blockchain-Daten des Blockchain-Systems zu bestimmen, wobei die Zielblockhöhe verwendet wird, um einen Verarbeitungsfortschritt der Blockchain-Daten anzugeben, und die Blockchain-Daten Daten und eine Blockhöhe, die den Daten entspricht, umfassen;
eine Sendeeinheit (502), die konfiguriert ist, um basierend auf der Zielblockhöhe eine Datensynchronisierungsanforderung an einen Zielknoten zu senden, wobei die Datensynchronisierungsanforderung die Zielblockhöhe umfasst;
und eine Aktualisierungseinheit (503), die konfiguriert ist, um als Reaktion auf ein Empfangen von Aktualisierungsdaten, die von dem Zielknoten gesendet werden, der Aktualisierungsdaten in einen lokalen Speicherbereich zu schreiben, wobei eine Blockhöhe, die den Aktualisierungsdaten entspricht, größer ist als die Zielblockhöhe,
wobei die Sendeeinheit Folgendes umfasst:
ein Ausführungsmodul, das konfiguriert ist, um die lokale Protokolldatei auszuführen, um die Blockchain-Daten zu generieren, die der lokalen Protokolldatei entsprechen, wobei eine Blockhöhe, die den Daten in den Blockchain-Daten entspricht, die der lokalen Protokolldatei entsprechend, kleiner als oder gleich wie die Zielblockhöhe ist; und
ein Sendemodul, das konfiguriert ist, um als Reaktion auf ein Bestimmen, dass die Ausführung der lokalen Protokolldatei abgeschlossen ist, die Datensynchronisierungsanforderung an den Zielknoten zu senden.

6. Vorrichtung nach Anspruch 5, wobei die Datensynchronisierungsanforderung eine Protokolldatei-Synchronisierungsanforderung umfasst;
und die Aktualisierungseinheit ferner zu Folgendem konfiguriert ist:
Schreiben, als Reaktion auf ein Empfangen einer Protokollaktualisierungsdatei, die von dem Zielknoten gesendet wird, der Protokollaktualisierungsdatei in die lokale Protokolldatei, wobei eine Blockhöhe, die der Protokollaktualisierungsdatei entspricht, größer ist als die Zielblockhöhe.

7. Vorrichtung nach Anspruch 5, wobei die Datensynchronisierungsanforderung eine Blockchain-Daten-Synchronisierungsanforderung umfasst;
und die Aktualisierungseinheit ferner eingerichtet ist zum:
Schreiben, als Reaktion auf den Empfang von vom Zielknoten gesendeten Blockchain-Aktualisierungsdaten, der Blockchain-Aktualisierungsdaten in einen lokalen Datenspeicherbereich, wobei eine zu den Blockchain-Aktualisierungsdaten gehörende Blockhöhe größer als die Zielblockhöhe ist.

8. Vorrichtung nach einem der Ansprüche 5 bis 7, wobei die Vorrichtung ferner zu Folgendem konfiguriert ist:
Bestimmen, ob das Schreiben der Aktualisierungsdaten abgeschlossen ist;
und Teilnehmen, als Reaktion auf ein Bestimmen, dass das Schreiben der Aktualisierungsdaten abgeschlossen ist, an einem Konsensprozess.

9. System zum Synchronisieren von Knotendaten, umfassend einen Rückwärts-Knoten und einen Zielknoten in einem Blockchain-System;
wobei der Rückwärts-Knoten konfiguriert ist, um das Verfahren nach einem der Ansprüche 1 bis 4 zu implementieren;
und der Zielknoten konfiguriert ist, um als Reaktion auf ein Empfangen der von dem Rückwärts-Knoten gesendeten Datensynchronisierungsanforderung, die Aktualisierungsdaten an den Rückwärts-Knoten zu senden, wobei die Datensynchronisierungsanforderung die Zielblockhöhe umfasst.

10. System nach Anspruch 9, wobei die Datensynchronisierungsanforderung die Protokolldateisynchronisierungsanforderung umfasst;
und wobei der Zielknoten ferner zu Folgendem konfiguriert ist:
als Reaktion auf ein Empfangen der von dem Rückwärts-Knoten gesendeten Protokolldateisynchronisierungsanforderung, Bestimmen einer anfänglichen Sendeposition einer lokalen Protokolldatei des Zielknotens basierend auf der Zielblockhöhe, wobei die anfängliche Sendeposition verwendet wird, um einen Trennungspunkt von Protokolldaten anzugeben, die einem Block mit einer Blockhöhe größer als der Zielblockhöhe entsprechen; und
basierend auf der anfänglichen Sendeposition, Senden der Protokolldaten, die dem Block mit der Blockhöhe größer als der Zielblockhöhe entsprechen, an den Rückwärts-Knoten.

11. System nach Anspruch 9, wobei die Datensynchronisierungsanforderung die Blockchain-Datensynchronisierungsanforderung umfasst;
und wobei der Zielknoten ferner zu Folgendem konfiguriert ist:
als Reaktion auf ein Empfangen der von dem Rückwärts-Knoten gesendeten Blockchain-Datensynchronisierungsanforderung, Bestimmen der Blockchaindaten mit einer Blockhöhe größer als der Zielblockhöhe als Blockchain-Aktualisierungsdaten; und
Senden der Blockchain-Aktualisierungsdaten an den Rückwärts-Knoten.

12. System nach Anspruch 11, wobei der Zielknoten ferner zu Folgendem konfiguriert ist:
als Reaktion auf ein Empfangen der von dem Rückwärts-Knoten gesendeten Blockchain-Datensynchronisierungsanforderung, Speichern der Blockchaindaten mit der Blockhöhe größer als der Zielblockhöhe als Blockchain-Aktualisierungsdaten in einem Pufferarray;
Sortieren der Blockchain-Aktualisierungsdaten i dem Pufferarray in einer Reihenfolge der Blockhöhen, um eine Blockchain-Aktualisierungsdatenliste zu generieren; und
Senden der Blockchain-Aktualisierungsdaten gemäß der Reihenfolge der Blockchain-Aktualisierungsdatenliste an den Rückwärts-Knoten.

13. Computerlesbares Medium, auf dem ein Computerprogramm gespeichert ist, wobei das Programm, wenn es von einem Prozessor ausgeführt wird, das Verfahren nach einem der Ansprüche 1 bis 4 implementiert.

## Revendications

1. Procédé de synchronisation de données de nœud, le nœud comprenant un nœud en retard dans un système de chaîne de blocs, et le procédé comprenant :
la détermination (201) d'une hauteur de bloc cible selon un fichier journal local pour synchroniser des données de chaîne de blocs du système de chaîne de blocs, dans lequel la hauteur de bloc cible est utilisée pour indiquer une progression de traitement des données de chaîne de blocs, et les données de chaîne de blocs comprennent des données et une hauteur de bloc correspondant aux données ;
l'envoi (202) d'une demande de synchronisation de données à un nœud cible sur la base de la hauteur de bloc cible, dans lequel la demande de synchronisation de données comprend la hauteur de bloc cible ; et
l'écriture (203), en réponse à la réception de données de mise à jour envoyées par le nœud cible, des données de mise à jour dans une zone de stockage locale, dans lequel une hauteur de bloc correspondant aux données de mise à jour est supérieure à la hauteur de bloc cible,
dans lequel l'envoi d'une demande de synchronisation de données à un nœud cible sur la base de la hauteur de bloc cible comprend :
l'exécution du fichier journal local pour générer les données de chaîne de blocs correspondant au fichier journal local, dans lequel une hauteur de bloc correspondant aux données dans les données de chaîne de blocs correspondant au fichier journal local est inférieure ou égale à la hauteur de bloc cible ; et
l'envoi, en réponse à la détermination que l'exécution du fichier journal local est terminée, de la demande de synchronisation de données au nœud cible.

2. Procédé selon la revendication 1, dans lequel la demande de synchronisation de données comprend une demande de synchronisation de fichier journal ; et
l'écriture, en réponse à la réception de données de mise à jour envoyées par le nœud cible, des données de mise à jour dans une zone de stockage locale, comprend :
l'écriture, en réponse à la réception d'un fichier journal de mise à jour envoyé par le nœud cible, du fichier journal de mise à jour dans le fichier journal local, dans lequel une hauteur de bloc correspondant au fichier journal de mise à jour est supérieure à la hauteur de bloc cible.

3. Procédé selon la revendication 1, dans lequel la demande de synchronisation de données comprend une demande de synchronisation de données de chaîne de blocs ; et
l'écriture, en réponse à la réception de données de mise à jour envoyées par le nœud cible, des données de mise à jour dans une zone de stockage locale, comprend :
l'écriture, en réponse à la réception de données de mise à jour de chaîne de blocs envoyées par le nœud cible, des données de mise à jour de chaîne de blocs dans une zone de stockage de données locale, dans lequel une hauteur de bloc correspondant aux données de mise à jour de chaîne de blocs est supérieure à la hauteur de bloc cible.

4. Procédé selon l'une quelconque des revendications 1 à 3, dans lequel le procédé comprend en outre :
le fait de déterminer (404) si l'écriture des données de mise à jour est terminée ; et
la participation (405), en réponse à la détermination que l'écriture des données de mise à jour est terminée, à un processus de consensus.

5. Appareil de synchronisation de données de nœud, le nœud comprenant un nœud en retard dans un système de chaîne de blocs, et l'appareil comprenant :
une unité de détermination (501), configurée pour déterminer une hauteur de bloc cible selon un fichier journal local pour synchroniser des données de chaîne de blocs du système de chaîne de blocs, dans lequel la hauteur de bloc cible est utilisée pour indiquer une progression de traitement des données de chaîne de blocs, et les données de chaîne de blocs comprennent des données et une hauteur de bloc correspondant aux données ;
une unité d'envoi (502), configurée pour envoyer une demande de synchronisation de données à un nœud cible sur la base de la hauteur de bloc cible, dans lequel la demande de synchronisation de données comprend la hauteur de bloc cible ; et
une unité de mise à jour (503), configurée pour écrire, en réponse à la réception de données de mise à jour envoyées par le nœud cible, les données de mise à jour dans une zone de stockage locale, dans lequel une hauteur de bloc correspondant aux données de mise à jour est supérieure à la hauteur de bloc cible,
dans lequel l'unité d'envoi comprend :
un module d'exécution, configuré pour exécuter le fichier journal local afin de générer les données de chaîne de blocs correspondant au fichier journal local, dans lequel une hauteur de bloc correspondant aux données dans les données de chaîne de blocs correspondant au fichier journal local est inférieure ou égale à la hauteur de bloc cible ; et
un module d'envoi, configuré pour envoyer, en réponse à la détermination que l'exécution du fichier journal local est terminée, la demande de synchronisation de données au nœud cible.

6. Appareil selon la revendication 5, dans lequel la demande de synchronisation de données comprend une demande de synchronisation de fichier journal ; et l'unité de mise à jour est en outre configurée pour :
écrire, en réponse à la réception d'un fichier journal de mise à jour envoyé par le nœud cible, le fichier journal de mise à jour dans le fichier journal local, dans lequel une hauteur de bloc correspondant au fichier journal de mise à jour est supérieure à la hauteur de bloc cible.

7. Appareil selon la revendication 5, dans lequel la demande de synchronisation de données comprend une demande de synchronisation de données de chaîne de blocs ; et l'unité de mise à jour étant en outre configurée pour :
écrire, en réponse à la réception de données de mise à jour de chaîne de blocs envoyées par le nœud cible, les données de mise à jour de chaîne de blocs dans une zone de stockage de données locale, dans lequel une hauteur de bloc correspondant aux données de mise à jour de chaîne de blocs est supérieure à la hauteur de bloc cible.

8. Appareil selon l'une quelconque des revendications 5 à 7, dans lequel l'appareil est en outre configuré pour :
déterminer si l'écriture des données de mise à jour est terminée ; et
participer, en réponse à la détermination que l'écriture des données de mise à jour est terminée, à un processus de consensus.

9. Système de synchronisation de données de nœud, comprenant un nœud en retard et un nœud cible dans un système de chaîne de blocs ;
le nœud en retard étant configuré pour mettre en œuvre le procédé selon l'une quelconque des revendications 1 à 4 ; et
le nœud cible étant configuré pour envoyer, en réponse à la réception de la demande de synchronisation de données envoyée par le nœud en retard, les données de mise à jour au nœud en retard, dans lequel la demande de synchronisation de données comprend la hauteur de bloc cible.

10. Système selon la revendication 9, dans lequel la demande de synchronisation de données comprend la demande de synchronisation de fichier journal ; et le nœud cible est en outre configuré pour :
déterminer, en réponse à la réception de la demande de synchronisation de fichier journal envoyée par le nœud en retard, une position initiale d'envoi d'un fichier journal local du nœud cible sur la base de la hauteur de bloc cible, dans lequel la position initiale d'envoi est utilisée pour indiquer un point de division des données de journal correspondant à un bloc ayant une hauteur de bloc supérieure à la hauteur de bloc cible ; et
envoyer, sur la base de la position initiale d'envoi, les données de journal correspondant au bloc ayant la hauteur de bloc supérieure à la hauteur de bloc cible au nœud en retard.

11. Système selon la revendication 9, dans lequel la demande de synchronisation de données comprend la demande de synchronisation de données de chaîne de blocs ; et le nœud cible est en outre configuré pour :
déterminer, en réponse à la réception de la demande de synchronisation de données de chaîne de blocs envoyée par le nœud en retard, les données de chaîne de blocs ayant une hauteur de bloc supérieure à la hauteur de bloc cible en tant que données de mise à jour de chaîne de blocs ; et
envoyer les données de mise à jour de chaîne de blocs au nœud en retard.

12. Système selon la revendication 11, dans lequel le nœud cible est en outre configuré pour :
stocker, en réponse à la réception de la demande de synchronisation de données de chaîne de blocs envoyée par le nœud en retard, les données de chaîne de blocs ayant la hauteur de bloc supérieure à la hauteur de bloc cible en tant que données de mise à jour de chaîne de blocs dans un tableau tampon ;
trier les données de mise à jour de chaîne de blocs dans le tableau tampon dans un ordre des hauteurs de bloc afin de générer une liste de données de mise à jour de chaîne de blocs ; et
envoyer les données de mise à jour de chaîne de blocs au nœud en retard selon l'ordre de la liste de données de mise à jour de chaîne de blocs.

13. Support lisible par ordinateur, stockant un programme informatique, dans lequel le programme, lorsqu'il est exécuté par un processeur, met en œuvre le procédé selon l'une quelconque des revendications 1 à 4.
